# EUROPEAN PATENT APPLICATION

(11) **EP 4 800 427 A1**
(43) Date of publication of application: **02.09.2026**
(21) Application number: 25160254.6
(22) Date of filing: 26.02.2025
(51) Int. Cl.: G01S 7/40, G01S 7/41, G01S 13/89, G01S 13/42, G06N 3/045, G01S 13/931

(54) **A COMPUTER-IMPLEMENTED METHOD FOR GENERATING SYNTHETIC RADAR DETECTION POINTS**

(71) Applicant: Zenseact AB, 417 56 Gothenburg (SE)
(72) Inventor: LIU, Jianan, 438 35 Landvetter (SE); HAN, Zijian, 417 22 Göteborg (SE); FU, Junsheng, 449 35 Nödinge (SE)
(74) Representative: Zacco Sweden AB

(57) **Abstract**

The disclosed technology relates at least to a computer-implemented method (100) for generating synthetic radar detection points for use in development of automated driving systems. The method (100) comprising: obtaining (S102) a trained radar measurement model, wherein the radar measurement model is a neural network-based radar measurement model, trained to predict a set of radar detection points of a defined scene at a given point in time, wherein the radar measurement model comprises an encoder module, a transformer-based decoder module, and an output module; obtaining (S104) data defining a scene at a given point in time for which synthetic radar detection points are to be generated, wherein the data defining the scene comprises information pertaining to one or more objects in the scene and a representation of a road; generating (S106) a set of synthetic radar detection points by processing (S106') the data defining the scene through the radar measurement model, thereby generating an output indicative of the set of synthetic radar detection points; and storing (S108) the generated set of synthetic radar detection points.

## Description

### TECHNICAL FIELD

The present disclosed technology relates to the field of automated driving systems. In particular, it is related to methods and devices for radar detection point synthesis for use in development of automated driving systems.

### BACKGROUND

Automated driving systems (ADS) rely on a combination of sensor technologies to perceive the surrounding environment. This includes radar sensors, which are particularly valuable due to their ability to operate in various weather and lighting conditions, while providing accurate information about distance and relative speed of surrounding objects. To develop and validate automated driving functionalities, vast amounts of data are required. However, both collection of data, and annotations of said data are both costly and time consuming. Here is where data simulation for generating synthetic sensor data can provide value.

Synthetic sensor data can be used e.g. for training, testing or validation automated driving systems, and the functions thereof, in diverse scenarios before deployment in the real-world. However, the quality and accuracy of the synthetic sensor data is important for achieving equivalent performance on both simulated and real-world data.

Existing radar measurement models used for generating synthetic radar data often suffer from limitations in accuracy, realism, and computational efficiency, as well as high cost and lack of transparency. Many conventional models fail to accurately replicate the complex interactions of radar signals with static and dynamic environments, including the number of detection points per object, their position, Doppler effect, reflectivity value, signal-to-noise ratio, etc. Furthermore, current approaches typically rely on oversimplified assumptions that do not fully capture the variability of real-world radar data, leading to discrepancies between simulated and actual sensor behavior. Developing ADS functionalities using such data will inherently lead to discrepancies in the performance when operating on synthetic vs real-world data. Therefore, there is a need for new and improved solutions for enhancing the fidelity of synthetic radar data, while maintaining computational efficiency for large-scale simulation environments.

### SUMMARY

The disclosed technology seeks to mitigate, alleviate or eliminate one or more of the above-identified deficiencies and disadvantages in the prior art to address various problems relating to generation of synthetic radar data, which can be used in the development of automated driving systems. More specifically, the disclosed technology is at least partly aimed at providing radar detection points as close as possible to measured radar detection points through the proposed transformer-based radar measurement model.

Various aspects and embodiments of the disclosed technology are defined below and in the accompanying independent and dependent claims.

According to a first aspect, there is provided a computer-implemented method for generating synthetic radar detection points for use in development of automated driving systems. The method comprises obtaining a trained radar measurement model. The radar measurement model is a neural network-based radar measurement model, trained to predict a set of radar detection points of a defined scene at a given point in time. The radar measurement model comprises an encoder module, a transformer-based decoder module, and an output module. The method further comprises obtaining data defining a scene at a given point in time for which synthetic radar detection points are to be generated. The data defining the scene comprises information pertaining to one or more objects in the scene and a representation of a road. The method further comprises generating a set of synthetic radar detection points by processing the data defining the scene through the radar measurement model, thereby generating an output indicative of the set of synthetic radar detection points. The method further comprises storing the generated set of synthetic radar detection points. With this aspect of the disclosed technology, similar advantages and preferred features are present as in the other aspects.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. With this aspect of the disclosed technology, similar advantages and preferred features are present as in the other aspects.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

According to a third aspect, there is provided a computing device for generating synthetic radar detection points for use in development of automated driving systems. The computing device comprises control circuitry. The control circuitry is configured to obtain a trained radar measurement model. The radar measurement model is a neural network-based radar measurement model, trained to predict a set of radar detection points of a defined scene at a given point in time. The radar measurement model comprises an encoder module, a transformer-based decoder module, and an output module. The control circuitry is further configured to obtain data defining a scene at a given point in time for which synthetic radar detection points are to be generated. The data defining the scene comprises information pertaining to one or more objects in the scene and a representation of a road. The control circuitry is further configured to generate a set of synthetic radar detection points by processing the data defining the scene through the radar measurement model, thereby generating an output indicative of the set of synthetic radar detection points. The control circuitry is further configured to store the generated set of synthetic radar detection points. With this aspect of the disclosed technology, similar advantages and preferred features are present as in the other aspects.

According to a fourth aspect, there is provided a computer-implemented method for training a radar measurement model to predict a set of radar detection points of a defined scene for a given point in time. The radar measurement model is a neural network-based radar measurement model. The radar measurement model comprises an encoder module, a transformer-based decoder module, and an output module. The method comprises obtaining a set of training samples. Each training sample comprises data defining a scene at a given point in time, and a ground truth. The data defining the scene comprises information pertaining to one or more objects in the scene and a representation of a road. The ground truth comprises a set of measured radar detection points of said scene. The method further comprises, for each training sample of the set of training samples, generating a set of synthetic radar detection points by processing the data defining the scene through the radar measurement model, thereby generating an output indicative of the set of synthetic radar detection points. The method further comprises comparing the set of synthetic radar detection points with the set of measured radar detection points of the ground truth. The method further comprises updating one or more model parameters of the radar measurement model based on the comparison. With this aspect of the disclosed technology, similar advantages and preferred features are present as in the other aspects.

According to a fifth aspect, there is provided a computer program product comprising instructions which when the program is executed by a computing device, causes the computing device to carry out the method according to any embodiment of the fourth aspect. According to an alternative embodiment of the fifth aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the fourth aspect. With this aspect of the disclosed technology, similar advantages and preferred features are present as in the other aspects.

According to a sixth aspect, there is provided a computing device for training a radar measurement model to predict a set of radar detection points of a defined scene for a given point in time. The radar measurement model is a neural network-based radar measurement model. The radar measurement model comprises an encoder module, a transformer-based decoder module, and an output module. The computing device comprises control circuitry configured to obtain a set of training samples. Each training sample comprises data defining a scene at a given point in time, and a ground truth. The data defining the scene comprises information pertaining to one or more objects in the scene and a representation of a road. The ground truth comprises a set of measured radar detection points of said scene. The control circuit is further configured to, for each training sample of the set of training samples, generate a set of synthetic radar detection points by processing the data defining the scene through the radar measurement model, thereby generating an output indicative of the set of synthetic radar detection points. The control circuit is further configured to compare the set of synthetic radar detection points with the set of measured radar detection points of the ground truth. The control circuit is further configured to update one or more model parameters of the radar measurement model based on the comparison. With this aspect of the disclosed technology, similar advantages and preferred features are present as in the other aspects.

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect.

An advantage of some embodiments is that it can provide synthetic radar data of a higher fidelity and realism compared to existing solutions, as well as more accurate simulation of radar attributes, which leads to more realistic training data. This can in turn improve any downstream systems or functions using the synthetic radar data. Thus, the Sim-to-Real gap can be reduced.

An advantage of some embodiments is that the proposed radar measurement model does not require any sensor data as input. Instead, it only requires scene reference data, describing the road and any objects in the scene as input, thereby making it suitable for being deployed in simulation environments.

An advantage of some embodiments is that it can be trained for any radar specification (including e.g. radar model, mounting position, etc.), and automatically learns to model any complex radar attributes of the radar for which the model is trained.

An advantage of some embodiments is that the radar measurement model is suitable for synthesizing radar detection points for multi-object and dynamic scenes.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will in the following be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments;
Figure 2 is a schematic illustration of a computing device, in accordance with some embodiments;
Figure 3 is a schematic flowchart representation of another method, in accordance with some embodiments;
Figure 4 is a schematic illustration of another computing device, in accordance with some embodiments;
Figure 5A illustrates, by way of example, a training process of a radar measurement model, in accordance with some embodiments;
Figure 5B illustrates, by way of example, a process of generating synthetic radar data using a radar measurement model, in accordance with some embodiments;
Figure 6 illustrates, by way of example, a model architecture of a radar measurement model, in accordance with some embodiments.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first feature map could be termed a second feature map, and, similarly, a second feature map could be termed a first feature map, without departing from the scope of the embodiments. The first feature map and the second feature map are both feature maps, but they are not the same feature map.

As used herein, the wording "one or more of" a set of elements (as in "one or more of A, Band C" or "at least one of A, Band C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and Band C, A and B, Band C, or A and C.

The term "obtaining" is herein to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc.

### Overview

As explained in the foregoing, the disclosed technology relates to synthetic data generation for development of automated driving systems (ADSs). More specifically, it relates to generation of synthetic radar detection points, which can be used in closed loop or open loop simulations.

Compared to other similar sensor data types, such as LiDAR, radar detection points are relatively sparse, making the proposed solution particularly well-suited for synthesizing radar data. Additionally, radar data is influenced by complex physical phenomena, such as the doppler effect, which must be accurately modelled to generate realistic synthetic radar data. The disclosed technology presents an efficient and accurate way of handling these challenges, ensuring high-fidelity radar data synthesis.

For synthetic sensor data generation in general, the obvious solution is to consider generative machine learning techniques, since the core of data synthesis is to generate data which is similar to real-measured data. However, the disclosed technology is instead at least partly based on the realization that the task of synthetizing radar detection points can also be seen as a task of detecting a radar detection point as an object, from the provided description of a surrounding environment. Thereby, also a discriminative model could be used. The disclosed technology builds upon a transformer-based radar measurement model (RMM). The RMM leverages the techniques of variable query transformers to be able to produce radar detection points in a more reliable, realistic, and accurate way.

### Definitions

Throughout the present disclosure, reference is made to different machine learning techniques (or models), generally referred to as networks or modules. By this, it is herein meant any form of machine learning techniques, such as deep learning models, neural networks, or the like, which can learn and adapt from input data and subsequently make predictions, decisions, classifications or any other relevant task based on new data.

Deployment of a machine learning model typically involves a training phase where the model learns from labeled or unlabeled training data to achieve accurate predictions during the subsequent inference phase. The training data (and input data during inference) in the context of autonomous driving functions may e.g. be an image, or sequence of images, LIDAR data (i.e. a point cloud), radar data, or any other form of data. Furthermore, the training/input data may comprise a combination or fusion of one or more different data types. Additionally, or in combination, it may comprise a combination or fusion of two or more instances of the same data types, such as two or more images from different cameras.

The machine learning model may be implemented in some embodiments using publicly available suitable software development machine learning code elements, for example, such as those which are available in PyTorch, TensorFlow, and Keras, or in any other suitable software development platform, in any manner known to be suitable to someone of ordinary skill in the art.

An example of such machine learning technique referred to below, is so-called Transformers (or transformer networks). Transformers is a well-known model architecture which leverages attention-mechanisms. Transformers efficiently capture dependencies in data by computing attention scores between all input tokens in parallel. This enables faster training and better scalability compared to traditional models like recurrent neural networks.

The surrounding environment of the vehicle can be understood as a general area around an ego-vehicle in which objects (such as traffic signs, or other vehicles, landmarks, obstacles, etc.) can be detected and identified by vehicle sensors (radar, LIDAR, cameras, etc.), i.e. within a sensor range of the ego-vehicle. The sensor data may thus depict the world around the vehicle. Put differently, the surrounding environment can refer to the world around the vehicle that is relevant for its decision and control.

By the wording "synthetic", as in "synthetic radar detection points" or "synthetic radar data", is herein meant synthetic in the sense that it is machine (or computer) generated, as opposed to "real" radar data as being recorded or otherwise collected data of the real world (e.g. by radar sensors).

### Embodiments

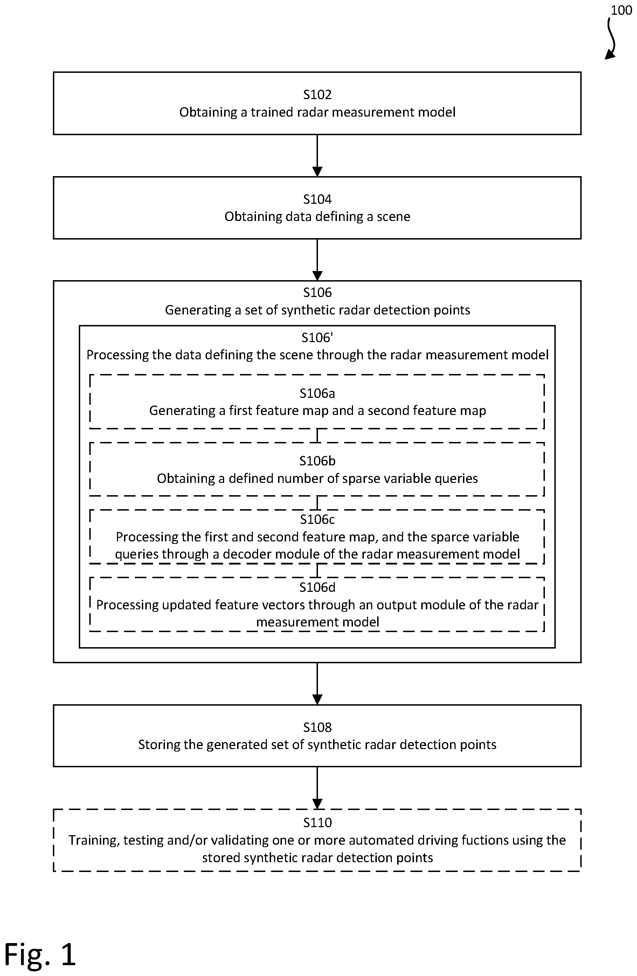

Figure 1 is a schematic flowchart representation of a computer-implemented method 100 for generating synthetic radar detection points (may also be referred to as "synthetic radar data") for use in development of automated driving systems (ADS). In other words, the method 100 can be seen as a method for radar data synthesis.

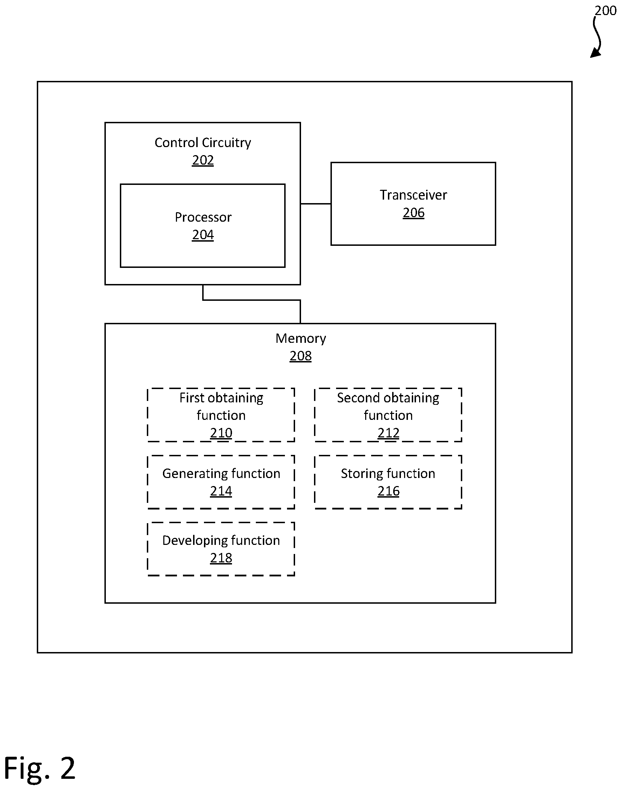

The method 100 can be performed by a general computing device, such as a server (may also be referred to as remote server, cloud server, central server, back-office server, fleet server, or back-end server). More specifically, the method 100 may be performed by a processing system of the server. The processing system may for example comprise one or more processors and one or more memories coupled to the one or more processors, wherein the one or more memories store one or more programs that perform the steps, services and functions of the method 100 disclosed herein when executed by the one or more processors. Such a computing device 200 is further described below in connection with Fig. 2.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. For instance, the steps denoted S102 and S104 may be performed independently of each other, and thus in any order and/or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

It should also be appreciated that the method 100 of Fig. 1 comprises some steps which are illustrated as boxes in solid lines and some steps which are illustrated in dashed lines. The steps which are shown in solid lines are steps which are comprised in the broadest example embodiment of the method 100. The steps which are comprised in dashed lines are examples of a number of optional steps which may form part of a number of alternative embodiments. It should be appreciated that the optional steps need not be performed in order. Furthermore, it should be appreciated that not all of the steps need to be performed. The example steps may be performed in any order and in any combination. For example, the method 100 may optionally comprise the step denoted S110. Alternatively, or in combination with step S110, the method may optionally comprise the sub-steps denoted S106a to S106d.

The method 100 comprises obtaining S102 a trained radar measurement model. The radar measurement model being trained to predict a set of radar detection points of a defined scene at a given point in time. Put differently, the radar measurement model may be trained to predict synthetic radar detection points which mimic real-world data and radar behavior. More specifically, the radar measurement model may be trained to process a description of a scene in a surrounding environment of an ego-vehicle (or of a radar sensor), and to output corresponding radar detection points predicted for said scene.

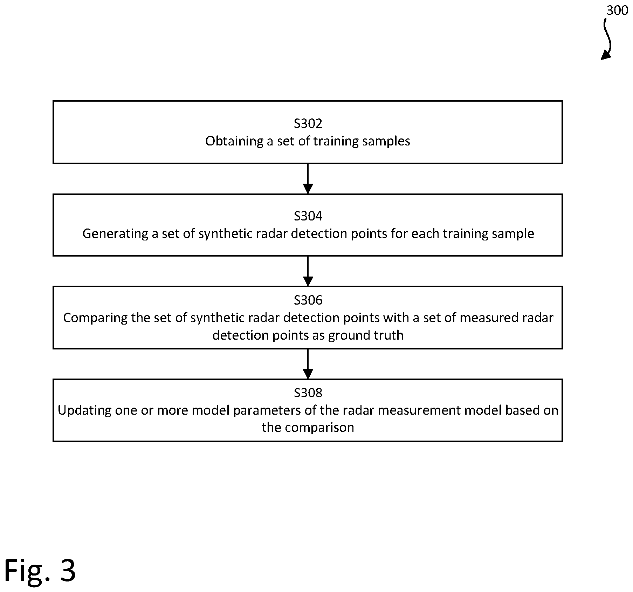

The radar measurement model may thus be a pre-trained model. The radar measurement model may e.g. be trained according to the method 300 as described below in connection with Fig. 3. The step of obtaining S102 the radar measurement model may comprise retrieving the radar measurement model from a storage or memory of the computing device performing the method 100, or of an external entity, or by performing the method 300 of training the RMM.

The radar measurement model may be associated with a certain radar specification. In other words, the radar measurement model may be trained for generating synthetic radar data which mimics radar data as if it would have been captured by a radar (sensor) with said radar specification. The radar specification may be a hardware specification of the radar. The radar specification may define one or more properties of the radar for which radar data is to be synthesized. Such properties may include a type, mode, or model of the radar. Additionally, or in combination, the one or more properties may include operational characteristics, such as operating frequency or wavelength of the radar signals, range, field-of-view, resolution, post-processing features, update rate, beam pattern, etc. Alternatively, or in combination, the one or more properties may include a placement or position of the radar, relative to the scene or to a vehicle on which the radar is mounted. As mentioned above, the radar measurement model may be trained on training data which reflects the radar specification to which the model is to be associated with. Thereby, the model may inherently learn to reflect the radar specification in the synthetic radar data it generates. However, in some embodiments, some, or all of the properties of the radar specification may be fed as input to the radar measurement model. Thereby, the same model can be used to generate synthetic radar data of a number of different radar specifications.

In the present context, a "scene" may be understood as a captured moment of a surrounding environment, including all relevant objects, road elements, and environmental conditions within the vehicle's sensor perception range. A scene typically consists of dynamic elements (e.g., vehicles, pedestrians, cyclists, or other road users), static elements (e.g., road lanes, traffic signs, buildings), and contextual factors (e.g., weather, lighting, road conditions).

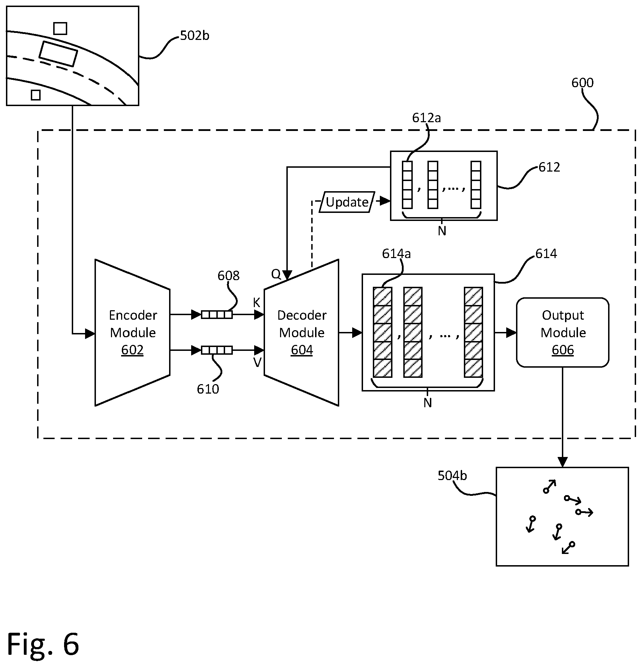

The radar measurement model (RMM) is a neural network-based radar measurement model. Meaning the radar measurement model is learned through a data-driven approach. More specifically, the radar measurement model comprises an encoder module, a transformer-based decoder module, and an output module. The wording "module" may herein be construed as a component of a machine learning model (herein the radar measurement model), that has a specific role (or performs a specific task) of the model's overall processing pipeline. The modules can thus be seen as sub-networks or layers of the model. The different modules can be trained separately, or in combination with each other (i.e. end-to-end training). In short, the encoder module may be configured to encode an input to the RMM, into an encoded representation. The encoder module may comprise a convolutional neural network (i.e. one or more convolutional layers). The convolutional neural network (CNN) may for instance be the so called ResNet50 or ResNet101, or any other conventional CNN. The decoder module may be transformer-based in the sense that it may comprise a variable query transformer (network). The transformer-based decoder module may be configured to process the encoded representation as input, to extract relevant features in the input data. The extracted features may then be processed through the output module, which is configured to generate the final output (in this case a set of synthetic radar detection points). For a more detailed description of the radar measurement model and the different modules, reference is made to Fig. 6 below.

It is to be noted that the different module, although referred to as individual modules, may also be realized as one combined module. The modules referred to herein mainly serve the purpose of referencing the different functions within the RMM.

The method 100 further comprises obtaining S104 data defining a scene at a given point in time for which synthetic radar detection points are to be generated. The data defining the scene may also be referred to as reference scene data or a scene description.

The data defining the scene comprises information pertaining to one or more objects in the scene. The information pertaining to the one or more objects may e.g. be two-dimensional or three-dimensional representations of the objects. Moreover, the information pertaining to the one or more objects in the scene may comprise a location, shape and/or size of the one or more objects. The information may further comprise material properties of the objects, such as a surface reflectivity. Furthermore, the information may comprise a bounding box associated with each object of the one or more objects. The information may further comprise motion data associated with each object, such as velocity and/or acceleration of dynamic objects in the scene. The reference scene data further comprises a representation of a road. In other words, the reference scene data may comprise information indicating a road geometry, or any other information pertaining to the layout of the road within the scene. The representation of the road may e.g. comprise road segmentation data. The road segmentation data may define what areas in the scene correspond to the road, and consequently also which areas in the scene that do not correspond to the road. The information pertaining to the one or more objects in the scene, and the representation of the road may be used to enable the RMM to generate radar detection points of both the one or more objects, as well as for the road.

The data defining the scene may be computer generated or otherwise simulated. In other words, the data defining the scene may be obtained from (or determined through) a computer simulated scene. Thus, it can be constructed synthetically. Even further, the data defining the scene may be manually constructed (potentially with the aid of a computer) as part of the development of the ADS (or any function thereof). In some cases, the data defining the scene may be constructed from actual measured sensor data. In other words, the data defining the scene may be extracted from ground truth information (e.g. from measured radar data, or any other sensor data available for a given scene). The latter case may in particular be used in the training process of the RMM. However, it can also be used to generate synthetic radar data from alternative point-of-views (e.g. from alternative trajectories) than that of the measured sensor data.

In some embodiments, the data defining the scene is a computer-generated image (or other representation) of the scene in a birds-eye view. In some embodiments, the data defining the scene is a computer-generated image of the scene, from a point (or field) of view of an onboard sensor of an ego-vehicle. In either case, the image may be a semantic image comprising segmentation information about bounding boxes of objects depicted in the image, and the road segmentation information. More generally, the data defining the scene can be any information about the environment covering a field-of-view of the radar for which synthetic radar data is to be generated. Regardless of the way the data defining the scene is represented, the RMM can learn to generate synthetic radar data from a field-of-view of the radar.

The data defining the scene may be associated with the given point in time in the sense that it can represent a snapshot of the scene at said point in time. The set synthetic radar detection points (or synthetic radar data for short) generated based on said scene description (as further described below) may thus correspond to a radar frame for said point in time. Synthetic radar detection points may then be generated for the same scene at several subsequent points in time, to generate a sequence of radar frames.

The data defining the scene may further comprise additional information about the scene. For example, the data defining the scene may further comprise environmental data, such as weather conditions, lighting conditions in the scene for which the synthetic radar data is to be generated.

The method 100 further comprises generating S106 a set of synthetic radar detection points by processing S106' the data defining the scene through the radar measurement model, thereby generating an output indicative of the set of synthetic radar detection points. Put differently, the data defining the scene may be fed as input to the RMM, which then outputs the set of synthetic radar detection points. Thus, no measured real-world sensor data of the scene need to be provided to the RMM, but only the reference scene data.

Processing S106' the data defining the scene through the radar measurement model may comprise the following sub-steps, denoted S106a to S106d.

Generating S106a a first feature map as a key vector, and a second feature map as value vector of the data defining the scene, by processing the data defining the scene through the encoder module. Put differently, the first and second feature maps may be generated by feeding the data defining the scene as input to the encoder module and obtaining the feature maps as output of the encoder module. The feature maps can be seen as numerical representations of the input data. The first feature map and the second feature map may later be used as the key vector and the value vector respectively, as input to the transformer-based decoder module.

Further, obtaining S106b a defined number of sparse variable queries, each sparse variable query representing a respective possible radar detection point. The defined number of sparse variable queries may be set based on the radar specification of the radar associated with the radar measurement model. More specifically, a specific radar sensor would typically transmit a certain number of radar signals, and for each reflected radar signal generate a radar detection point. Each sparse variable query (or rather the feature vector associated thereto) may eventually become a potential radar detection point after the output module. Thereby, the defined number of sparse variable queries may be set based on the radar specification, or more specifically be set to the number of radar signals transmitted by the radar. As explained further below in connection with Fig. 6, the sparse variable queries can be determined (or learned) during a training process of the decoder module. In other words, the obtained sparse variable queries can be obtained through training the decoder module. During inference of the decoder module, the sparse variable queries can be kept constant.

Further, processing S106c the first feature map, the second feature map, and the sparse variable queries through the transformer-based decoder module. In other words, the first feature map is input as the key, the second feature map is input as the value, and the sparse variable queries as the query to the transformer-based decoder module. The transformer-based decoder module is configured to update a feature vector associated with each sparse variable query based on a correlation between the key vector and the sparse variable queries, and outputting the updated feature vector associated with each sparse variable query. The value (i.e. the second feature map) can be weighed based on the correlation and used to update the feature vectors. The general inner workings of a transformer are well-known in the art, and therefore not explained in further detail here. The feature vectors (or feature embeddings) can herein be seen as a numerical representation of relevant feature extracted from the input, by the decoder module.

Further, processing S106d the updated feature vector associated with each sparse variable query through the output module which generates the set of synthetic radar detection points as output. The output module can be seen as a classifier or prediction head of the RMM. More specifically, the output module receives as input the feature vectors from the decoder module, and generates the output based on these. Each radar detection point in the output may stem from one feature vector among the feature vectors output from the decoder module. The output module may be any suitable network, such as a Multilayer Perceptron.

Each radar detection point may be associated with a position or location in space. Each radar detection point of the set of synthetic radar detection points may further comprise information indicative of one or more radar attributes associated with said radar detection point. The one or more radar attributes may be any one of a distance to an object to which the radar detection point corresponds, an azimuth angle, an elevation angle, a signal strength value, a reflectivity value of the object to which the radar detection point corresponds, and a doppler value. The synthetic radar detection points may thus comprise any information which actual measured radar detection points comprise.

The output of the RMM may comprise the set of synthetic radar detection points directly. In other words, the output of the RMM can be used as is in subsequent development of the ADS (or any function thereof). Alternatively, or in combination, the output of the RMM may comprise any information from which the set of synthetic radar detection points can be derived (e.g. through additional processing of the data).

The method 100 further comprises storing S108 the generated set of synthetic radar detection points. The set of synthetic radar detection points may be stored S108 for further development of the ADS. The set of synthetic radar detection points may be stored S108 together with the data defining the scene. Storing S108 the set of synthetic radar detection points may encompass any action that involves retaining the generated data in a way that allows it to be accessed and used in the development process of the ADS. This includes, but is not limited to, persistent storage, intermediate storage, and temporary storage. Persistent storage may involve storing the data in a non-volatile memory medium (e.g., a hard drive, SSD, database, or cloud storage) for later retrieval and use in development at a later point in time. Intermediate storage may involve storing the data as an intermediate step in a pipeline, where it may undergo preprocessing, augmentation, validation, or any other intermediate steps, before being used for subsequent development. Temporary storage may involve holding the data in volatile memory (e.g., RAM, cache, or temporary buffer) for short-term retention before it is used in a subsequent step of the development process. In conclusion, the word "storing" is herein to be interpreted broadly, covering both short-term and long-term retention, regardless of whether the data is used immediately or at a later point in time.

The method 100 may further comprise training, testing and/or validating S110 one or more automated driving functions of an automated driving system using the stored synthetic radar detection points. In other words, the stored synthetic radar detection points may be used in subsequent development of the ADS (or any function thereof). The set of synthetic radar detection points can be used instead of, or in combination with, real measured sets of radar detection points in any process where such data may be used. For example, the synthetic radar data can be used to train a perception model of the ADS, to perform tasks such as object detection, object tracking, etc. In this application, the use of synthetic radar data can dramatically reduce the cost of real-world data collection, by at least partly replacing this process with the above-described method 100 for generating synthetic radar data. Similarly, the synthetic radar data can be used to test or validate the perception model's performance on novel scenes or scenarios (particularly critical or edge case scenarios) generated through the method 100 described above, where the training data used to initially train the perception model lacks coverage. Moreover, the generated synthetic sensor data may either be used as induvial radar data frames, or as a sequence of radar data frames formed by a plurality of synthetic radar data frames of subsequent points in time.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Figure 2 is a schematic illustration of a computing device 200, in accordance with some embodiments of the disclosed technology. The computing device 200 may be configured to perform the method 100 as described in connection with Fig. 1. Thus, the computing device 200 is configured to generate synthetic radar detection points for use in development of automated driving systems.

The computing device 200 as described herein, refers to a computer system, or any device or general computing system configured to perform various functions. The computing device 200 may for instance refer to a server or the like. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as other devices or vehicles. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random-access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 are described.

The control circuitry 202 is configured to obtain a trained radar measurement model. This may be performed e.g. by execution of a first obtaining function 210. The radar measurement model is a neural network-based radar measurement model, trained to predict a set of radar detection points of a defined scene at a given point in time. The radar measurement model comprises an encoder module, a transformer-based decoder module, and an output module.

The control circuitry 202 is further configured to obtain data defining a scene at a given point in time for which synthetic radar detection points are to be generated. This may be performed e.g. by execution of a second obtaining function 212. The data defining the scene comprises information pertaining to one or more objects in the scene and a representation of a road. It is to be noted that the first obtaining function 210 and the second obtaining function 212 may be implemented as two separate functions, or as one common obtaining function.

The control circuitry 202 is further configured to generate a set of synthetic radar detection points by processing the data defining the scene through the radar measurement model, thereby generating an output indicative of the set of synthetic radar detection points. This may be performed e.g. by execution of a generating function 214.

The control circuitry 202 is further configured to store the generated set of synthetic radar detection points. This may be performed e.g. by execution of a storing function 216.

The control circuitry 202 may be further configured to train, test and/or validate one or more automated driving functions of an automated driving system, using the stored synthetic radar detection points. This may be performed e.g. by execution of a developing function 218.

It should be noted that the principles, features, aspects, and advantages of the method 100 as described above in connection with Fig. 1, are applicable also to the computing device 200 as described herein. To avoid undue repetition, reference is made to the above. Hence, the control circuitry may be configured to perform any of the steps as described as part of the method 100.

Figure 3 is a schematic flowchart representation of a computer-implemented method 300 for training a radar measurement model (RMM) to predict a set of radar detection points of a defined scene for a given point in time. In other words, the RMM is trained to generate synthetic radar data for the defined scene. The RMM herein refers to the model described above in connection with Fig. 1. In short, the radar measurement model is a neural network-based radar measurement model, comprising an encoder module, a transformer-based decoder module, and an output module. Thus, the RMM resulting from the training method 300 described in the following, may be used in the method 100 described in connection with Fig. 1 above.

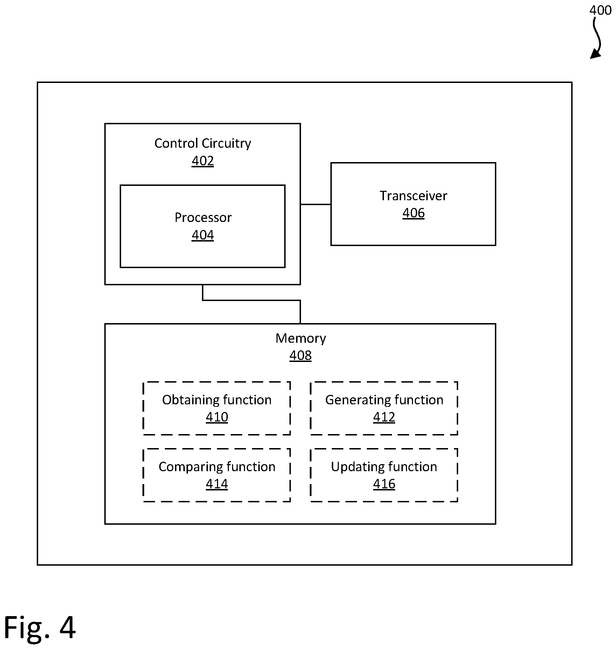

The method 300 can be performed by a general computing device, such as a server (may also be referred to as remote server, cloud server, central server, back-office server, fleet server, or back-end server). More specifically, the method 300 may be performed by a processing system of the server. The processing system may for example comprise one or more processors and one or more memories coupled to the one or more processors, wherein the one or more memories store one or more programs that perform the steps, services and functions of the method 300 disclosed herein when executed by the one or more processors. Such a computing device 400 is further described below in connection with Fig. 4. It is to be noted that the computing device 400 for performing the method 300 currently described, may be the same computing device 200 as described above in connection with Fig. 2.

Below, the different steps of the method 300 are described in more detail. Even though illustrated in a specific order, the steps of the method 300 may be performed in any suitable order as well as multiple times. Thus, although Fig. 3 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 300 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 300 comprises obtaining S302 a set of training samples, each training sample comprising data defining a scene at a given point in time, and a ground truth. In other words, data defining a scene at a given point in time together with a ground truth associated with said scene forms a training sample. The data defining the scene comprises information pertaining to one or more objects in the scene and a representation of a road. The ground truth comprises a set of measured radar detection points of said scene. Thus, the ground truth comprises a set of radar detection points as measured by a radar sensor of the real-world. The set of training samples may be obtained S302 from a database, or other form of data storage. As stated above, the ground truth comprises a set of real-measured radar detection points from a scene. The data defining the scene may then be determined from the scene, e.g. from other sensor data pertaining to said scene, or from the measured set of radar detection points.

The method further comprises, for each training sample of the set of training samples, generating S304 a set of synthetic radar detection points by processing the data defining the scene through the radar measurement model, thereby generating an output indicative of the set of synthetic radar detection points.

The method 300 further comprises comparing S306 the set of synthetic radar detection points with the set of measured radar detection points of the ground truth, for said training sample. In other words, the predicted set of synthetic radar detection points generated by the RMM is compared with the radar detection points measured in the real-world. The set of synthetic radar detection points may be compared S306 with the set of measured radar detection points e.g. through bipartite matching. As a non-limiting example, the Hungarian algorithm may be used for bipartite matching.

The step of comparing S306 the set of synthetic radar detection points with the set of measured radar detection points of the ground truth may involve calculating a loss, according to a defined loss function.

Several different loss functions for reflecting radar-specific characteristics can be used. For example, a set-to-set matching loss (e.g. Hungarian algorithm for matching points) for sparse detections. In this case, the Hungarian algorithm may be used to match the individual predicted radar detection points with the radar detection points of the ground truth. Then, calculate an L1 loss (for position accuracy), a focal loss (for confidence scores) and/or a chamfer loss (for enhancing spatial consistency), etc. In another example, a heatmap-based regression loss can be used for dense radar detections, if output is an occupancy map or grid.

The method 300 further comprises updating S308 one or more model parameters of the radar measurement model based on the comparison, for said training sample. In other words, the model parameters of the RMM may be updated in view of the calculated loss. The model parameters herein refer to learnable parameters (e.g. weights) of the RMM. The model parameters may be learnable parameters of the encoder module, the decoder module, and/or the output module.

In some embodiments, updating S308 the one or more model parameters of the radar measurement model comprises determining a gradient based on the comparison, and backpropagating the gradient and the one or more model parameters of the radar measurement model. More specifically, the gradient may be calculated by comparing the matched estimated queries (i.e. of the sparse variable queries) and optionally with their radar attributes, against the ground-truth radar detection points. The gradient can then be back propagated and the weights of RMM updated accordingly.

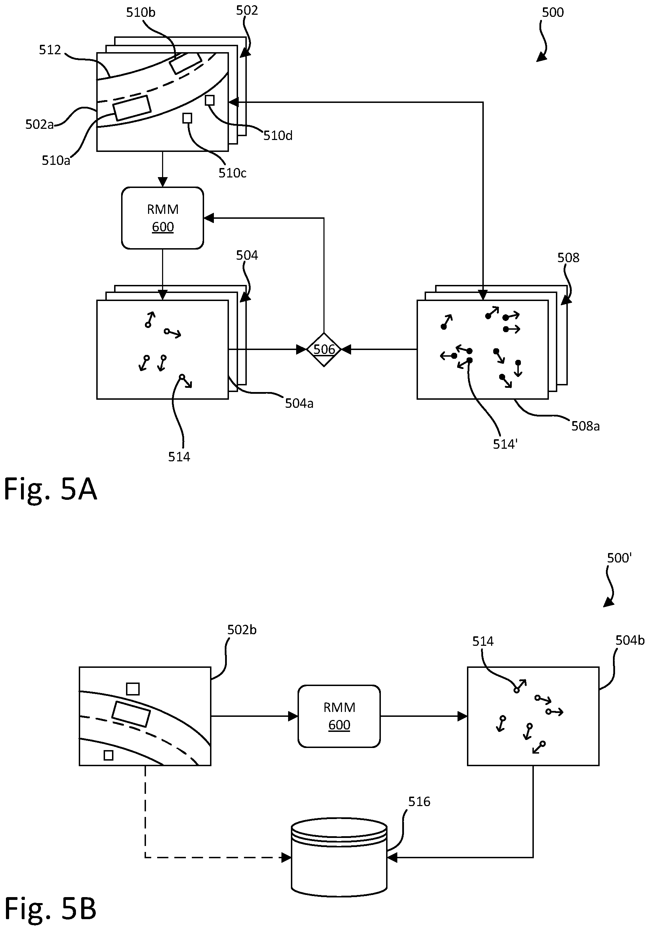

Further details regarding the training method 300 will be presented below, in connection with Fig. 5A.

It is to be noted that any feature, principles or advantages presented in connection with the RMM as described above in connection with Fig. 1, are applicable also to the method 300 and the RMM as described in connection with Fig. 3. To avoid undue repetition, reference is made to the above.

Executable instructions for performing these functions are, optionally, included in a non-transitory computer-readable storage medium or other computer program product configured for execution by one or more processors.

Figure 4 is a schematic illustration of a computing device 400, in accordance with some embodiments of the disclosed technology. The computing device 400 may be configured to perform the method 300 as described in connection with Fig. 3. Thus, the computing device 400 is configured to train a radar measurement model to predict a set of radar detection points of a defined scene for a given point in time.

The computing device 400 as described herein, refers to a computer system, or any device or general computing system configured to perform various functions. The computing device 400 may for instance refer to a server or the like. Even though the computing device 400 is herein illustrated as one device, the computing device 400 may be a distributed computing system, formed by a number of different devices. It is to be appreciated that the computing device 400 may be the same computing device 200 as described above in connection with Fig. 2.

The computing device 400 comprises control circuitry 402. The control circuitry 402 may physically comprise one single circuitry device. Alternatively, the control circuitry 402 may be distributed over several circuitry devices.

As shown in the example of Fig. 4, the computing device 400 may further comprise a transceiver 406 and a memory 408. The control circuitry 402 being communicatively connected to the transceiver 406 and the memory 408. The control circuitry 402 may comprise a data bus, and the control circuitry 402 may communicate with the transceiver 406 and/or the memory 408 via the data bus.

The control circuitry 402 may be configured to carry out overall control of functions and operations of the computing device 400. The control circuitry 402 may include a processor 404, such as a central processing unit (CPU), microcontroller, or microprocessor. The processor 404 may be configured to execute program code stored in the memory 408, in order to carry out functions and operations of the computing device 400. The control circuitry 402 is configured to perform the steps of the method 100 as described above in connection with Fig. 3. The steps may be implemented in one or more functions stored in the memory 408.

The transceiver 406 is configured to enable the computing device 400 to communicate with other entities, such as other devices or vehicles. The transceiver 406 may both transmit data from and receive data to the computing device 400.

The memory 408 may be a non-transitory computer-readable storage medium. The memory 408 may be one or more of a buffer, a flash memory, a hard drive, a removable media, a volatile memory, a non-volatile memory, a random-access memory (RAM), or another suitable device. In a typical arrangement, the memory 408 may include a non-volatile memory for long-term data storage and a volatile memory that functions as system memory for the computing device 400. The memory 408 may exchange data with the circuitry 402 over the data bus. Accompanying control lines and an address bus between the memory 408 and the circuitry 402 also may be present.

Functions and operations of the computing device 400 may be implemented in the form of executable logic routines (e.g., lines of code, software programs, etc.) that are stored on a non-transitory computer readable recording medium (e.g., the memory 408) of the computing device 400 and are executed by the circuitry 402 (e.g., using the processor 404). Put differently, when it is stated that the circuitry 402 is configured to execute a specific function, the processor 404 of the circuitry 402 may be configured to execute program code portions stored on the memory 408, wherein the stored program code portions correspond to the specific function. Furthermore, the functions and operations of the circuitry 402 may be a stand-alone software application or form a part of a software application that carries out additional tasks related to the circuitry 402. The described functions and operations may be considered a method that the corresponding device is configured to carry out, such as the method 300 discussed above in connection with Fig. 3. In addition, while the described functions and operations may be implemented in software, such functionality may as well be carried out via dedicated hardware or firmware, or some combination of one or more of hardware, firmware, and software. In the following, the function and operations of the computing device 400 are described.

The control circuitry 402 is configured to obtain a set of training samples. This may be performed e.g. by execution of an obtaining function 410. Each training sample comprises data defining a scene at a given point in time, and a ground truth. The data defining the scene comprises information pertaining to one or more objects in the scene and a representation of a road. The ground truth comprises a set of measured radar detection points of said scene.

The control circuitry 402 is further configured to, for each training sample of the set of training samples, generate a set of synthetic radar detection points by processing the data defining the scene through the radar measurement model, thereby generating an output indicative of the set of synthetic radar detection points. This may be performed e.g. by execution of a generating function 412.

The control circuitry 402 is further configured to compare the set of synthetic radar detection points with the set of measured radar detection points of the ground truth, for said training sample. This may be performed e.g. by execution of a comparing function 414.

The control circuitry 402 is further configured to update one or more model parameters of the radar measurement model based on the comparison, for said training sample. This may be performed e.g. by execution of an updating function 416.

It should be noted that the principles, features, aspects, and advantages of the method 300 as described above in connection with Fig. 3, are applicable also to the computing device 400 as described herein. To avoid undue repetition, reference is made to the above. Hence, the control circuitry may be configured to perform any of the steps as described as part of the method 300.

Figure 5A illustrates, by way of example, a training process 500 of a radar measurement model 600, in accordance with some embodiments. Details of the inner workings of the RMM 600 are presented below, in connection with Fig. 6. The RMM 600 is trained through a data driven-based deep-learning approach, to enable the RMM 600 to learn to generate synthetic radar detection points which behave as close to real-measured radar detection points as possible. The training process 500 can be seen as a supervised training procedure. Moreover, the illustrated example of the training process 500 can be seen as an extended description of the method 300 for training the RMM, as described above in connection with Fig. 3.

In general, the training process 500 involves feeding a set of training samples 502 to the RMM 600, comparing the network outputs 504 (herein a set of synthetic radar detection points for each training sample) with ground truths 508 (herein real-measured radar detection points) associated with each training sample of the set of training samples 502, and updating parameters (e.g. learnable weights) of the RMM 600 based on the comparison.

In more detail, a training sample 502a of the set of training samples 502 comprises data defining a scene at a given point in time. The data defining the scene comprises information pertaining to one or more objects 510a-d in the scene, as well as a representation of a road 512. For illustrative purposes, the scene is illustrated as a birds-eye view of a scene. The scene herein comprises bounding boxes for a first and a second road user 510a, 510b (such as vehicles), as well as for a first and a second object 510c, 510d located within the driving environment. Moreover, the representation of the road 512 may comprise road segmentation data, defining what areas in the scene correspond to the road, and what areas do not.

The data defining the scene is herein illustrated as a birds-eye view for improved understanding. It is however to be noted that the data defining the scene may be represented in other ways as well, such as from a point (or field) of view of the vehicle (or of a radar sensor mounted on the vehicle), or by non-visual information, such as textual and/or numerical representations. Regardless of how the data defining the scene is represented, the generated set of synthetic radar detection points may be generated to mimic a set of radar detection points captured by a radar sensor.

As explained in the foregoing, the training sample 502a can then be fed to the RMM 600. The RMM then generates a set of synthetic radar detection points 504a (i.e. predicted synthetic radar data) associated with said training sample 502a. For illustrative purposes only, the synthetic radar detection points 514 and the measured radar detection points 514' are herein represented by circles (in case of synthetic points) and dots (in case of measured points), which represents the locations in the scene where a radar signal have been reflected, and an arrow, representing a movement direction of whichever object has generated the radar detection points, relative to the radar sensor. It is to be noted that the number, location, and direction of the radar detection points are not representative of a real-world scenario but merely serve as an illustrative example.

The generated set of synthetic radar detection points 504a is then compared (herein represented by a comparison block 506) with a ground truth associated with the training sample 502a. The ground truth comprises a set of measured radar detection points 508a, as measured by an actual radar sensor of the scene.

The results of the comparison block 506 can then be fed to the RMM 600 which updates parameters of the model in view of the comparison. It is to be noted that even though the comparison block 506 is represented as a stand-alone component of the training process 500, it may also be implemented as part of the RMM 600. The RMM 600 may be trained end-to-end, meaning learnable parameters of the different modules of the RMM 600 can be updated together, in the same process. It is, however, to be noted, that parts (e.g. some of the modules) of the RMM 600 can be trained separately or individually.

The above-described training process 500 can then be repeated for the other training samples of the set of training samples 502, until some desired metric (e.g. a convergence metric or performance metric) has been met, or until all training samples have been used.

Moving on to Fig. 5B, which illustrates, by way of example, a process of generating synthetic radar data using the radar measurement model 600 trained according to the training process 500 above. The process illustrated in Fig. 5B can thus be seen as an inference process 500' of how the trained RMM 600 can be used. The inference process 500' thus illustrates the general principles of the method 100 as described above in connection with Fig. 1.

In the inference process 500', the trained RMM is deployed (e.g. as part of a simulation platform) to generate sets of synthetic radar detection points for scenes defined by some scene reference data. The scenes may e.g. be scenes of rare or previously unexperienced scenes which is desired for the development of an ADS (or any function thereof).

In more detail, data defining a scene 502b (e.g. ground truth bounding boxes of objects, road segmentation data, and potentially other additional available information about the scene) is fed to the trained RMM 600.

The RMM 600 then generates (or predicts) a set of synthetic radar detection points 504b for said scene 502b, potentially together with some radar attributes. The set of synthetic radar detection points 504b can then be stored, e.g. in a database 516, for subsequent development of the ADS. Optionally, also the data defining the scene 502b can be stored together with the set of synthetic radar detection points 504b. The data stored in the database 516 can later be used e.g. as training, testing, or validation data in the development of the ADS or any function thereof.

Turning now to Figure 6, which illustrates, by way of example, a model architecture of the radar measurement model 600, in accordance with some embodiments. More specifically, Fig. 6 shows the inner workings of the RMM 600 during the inference process 500' as described above in connection with Fig. 5B. Thus, Fig. 6 can be seen as a more detailed explanation of the inference process 500'. However, the described internal process of the RMM 600 applies also to the training process 500 as described above.

As in the case of Fig. 5B above, the input to the RMM 600 is data defining a scene 502b. Moreover, the output of the model 600 is a set of synthetic radar detection points 504b for said scene.

As shown in Fig. 6, the radar measurement model 600 comprises an encoder module 602, a decoder module 604 and an output module 606.

The encoder module 602 may comprise a CNN, or any other suitable network architecture. The selection of the encoder module 602 may depend on in which form the data defining the scene is provided. The decoder module 604 is a transformer-based decoder module 604. This means that the decoder module 604 comprises some form of variable query transformer network. The output module 606 may be seen as a prediction head of the RMM 600, and comprise any additional layers or networks needed to generate the desired output of the RMM 600, based on the output of the decoder module 604.

The encoder module 602 receives as input the data defining the scene 502b. The encoder module then encodes the input data and generates two separate feature maps, i.e. a first feature map 608 and a second feature map 610.

The first feature map 608 is then fed as a key vector (herein denoted by a "K"), and the second feature map 610 as a value vector (herein denoted by a "V") to the decoder module 604, or vice versa. The decoder module 604 further takes as input a number of sparse variable queries 612 (denoted by a "Q"). In the illustrated example, N number of sparse variable queries 612 are used, where N is a positive integer. Each sparse variable query 612a of the number of sparse variable queries 612 may be associated with a respective potential radar detection point. The number N of sparse variable queries may thus be a predefined number, based on an expected number of existing radar detection points.

The sparse variable queries 612 can be learnt during training of the decoder module 604. More specifically, the sparse variable queries 612 may be initialized (e.g. through random initialization) with some initial values. The sparse variable queries 612 may then be set at learnable parameters, and be updated (as illustrated by the dashed line) during backpropagation during the training process 500. Later, during forward propagation in training and inference, the sparse variable queries can be kept constant (i.e. not be updated).

The transformer-based decoder module 604 then processes the key vector, the value vector and the sparse variable queries to output a number of feature vectors 614, comprising one feature vector 614a for each sparse variable query 612a of the number of sparse variable queries 612. The feature vectors 614 are generated based on a correlation between the key vector and the sparse variable queries. More specifically, the feature vectors are updated, during forward propagation, based on the value vector, as weighted in view of the correlation. Put differently, the value vector is weighted based on the correlation and used to update the feature vectors.

The feature vectors 614 are then fed to the output module 606. The output module 606 may be configured decode the feature vectors 614 even further, into the set of synthetic radar detection points 504b, and associated radar attributes, which are to be outputted by the RMM 600.

As stated above, the RMM 600 may be trained end-to-end. In other words, learnable parameters of the encoder module 602 (e.g. network weights of a CNN), the decoder module 604 (e.g. the sparse variable queries), and the output module 606 (e.g. network weights of the output module) can be learned during the same process. Alternatively, some, or all, of the different modules can be trained separately. For example, the encoder module 602 can be trained through a first learning process. Then, its learnable parameters (i.e. weights) can be frozen. The trained encoder module 602 can then be connected together with the decoder module 604 and the output module 606, to form the complete RMM. Then, the RMM (or more specifically the decoder module 604 and the output module 606) can be trained through a second learning process (e.g. the training process 500 as described above).

The disclosed technology has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) for generating synthetic radar detection points for use in development of automated driving systems, the method (100) comprising:
obtaining (S102) a trained radar measurement model, wherein the radar measurement model is a neural network-based radar measurement model, trained to predict a set of radar detection points of a defined scene at a given point in time, wherein the radar measurement model comprises an encoder module, a transformer-based decoder module, and an output module;
obtaining (S104) data defining a scene at a given point in time for which synthetic radar detection points are to be generated, wherein the data defining the scene comprises information pertaining to one or more objects in the scene and a representation of a road;
generating (S106) a set of synthetic radar detection points by processing (S106') the data defining the scene through the radar measurement model, thereby generating an output indicative of the set of synthetic radar detection points; and
storing (S108) the generated set of synthetic radar detection points.

2. The method (100) according to claim 1, wherein processing (S106') the data defining the scene through the radar measurement model comprises:
generating (S106a) a first feature map as a key vector, and a second feature map as value vector of the data defining the scene, by processing the data defining the scene through the encoder module;
obtaining (S106b) a defined number of sparse variable queries, each sparse variable query representing a respective possible radar detection point;
processing (S106c) the first feature map, the second feature map, and the sparse variable queries through the transformer-based decoder module, wherein the transformer-based decoder module is configured to update a feature vector associated with each sparse variable query based on a correlation between the key vector and the sparse variable queries, and outputting the updated feature vector associated with each sparse variable query; and
processing (S106d) the updated feature vector associated with each sparse variable query through the output module which generates the set of synthetic radar detection points as output.

3. The method (100) according to claim 2, wherein the defined number of sparse variable queries is set based on specification of a radar associated with the radar measurement model.

4. The method (100) according to any one of the claims 1 to 3, wherein the information pertaining to the one or more objects in the scene comprises a location, shape and/or size of the one or more objects.

5. The method (100) according to any one of the claims 1 to 4, wherein the information pertaining to the one or more objects in the scene comprises a bounding box associated with each object of the one or more objects.

6. The method (100) according to any one of the claims 1 to 5, wherein the data defining the scene is obtained from a computer simulated scene.

7. The method (100) according to any one of the claims 1 to 6, wherein each predicted radar detection point of the set of synthetic radar detection points comprises information indicative of one or more radar attributes associated with said radar detection point.

8. The method (100) according to claim 7, wherein the one or more radar attributes is any one of a distance to an object to which the radar detection point corresponds, an azimuth angle, an elevation angle, a signal strength value, a reflectivity value of the object to which the radar detection point corresponds, and a doppler value.

9. The method (100) according to any one of the claims 1 to 8, further comprising training, testing and/or validating (S110) one or more automated driving functions of an automated driving system using the stored synthetic radar detection points.

10. The method (100) according to any one of the claims 1 to 9, wherein the radar measurement model is trained by the method (300) according to any one of the claims 15 to 17.

11. A computer program product comprising instructions, which when the program is executed by a computing device, causes the computing device to carry out the method (100) according to any one of the claims 1 to 10.

12. A computing device (200) for generating synthetic radar detection points for use in development of automated driving systems, the computing device (200) comprising control circuitry (202) configured to:
obtain a trained radar measurement model, wherein the radar measurement model is a neural network-based radar measurement model, trained to predict a set of radar detection points of a defined scene at a given point in time, wherein the radar measurement model comprises an encoder module, a transformer-based decoder module, and an output module;
obtain data defining a scene at a given point in time for which synthetic radar detection points are to be generated, wherein the data defining the scene comprises information pertaining to one or more objects in the scene and a representation of a road;
generate a set of synthetic radar detection points by processing the data defining the scene through the radar measurement model, thereby generating an output indicative of the set of synthetic radar detection points; and
store the generated set of synthetic radar detection points.

13. A computer-implemented method (300) for training a radar measurement model to predict a set of radar detection points of a defined scene for a given point in time, wherein the radar measurement model is a neural network-based radar measurement model, wherein the radar measurement model comprises an encoder module, a transformer-based decoder module, and an output module, the method (300) comprising:
obtaining (S302) a set of training samples, each training sample comprising data defining a scene at a given point in time, and a ground truth, wherein the data defining the scene comprises information pertaining to one or more objects in the scene and a representation of a road, wherein the ground truth comprises a set of measured radar detection points of said scene;
for each training sample of the set of training samples:
generating (S304) a set of synthetic radar detection points by processing the data defining the scene through the radar measurement model, thereby generating an output indicative of the set of synthetic radar detection points;
comparing (S306) the set of synthetic radar detection points with the set of measured radar detection points of the ground truth; and
updating (S308) one or more model parameters of the radar measurement model based on the comparison.

14. A computer program product comprising instructions, which when the program is executed by a computing device, causes the computing device to carry out the method (300) according to claim 13.

15. A computing device (400) for training a radar measurement model to predict a set of radar detection points of a defined scene for a given point in time, wherein the radar measurement model is a neural network-based radar measurement model, wherein the radar measurement model comprises an encoder module, a transformer-based decoder module, and an output module, the computing device (400) comprising control circuitry (402) configured to:
obtain a set of training samples, each training sample comprising data defining a scene at a given point in time, and a ground truth, wherein the data defining the scene comprises information pertaining to one or more objects in the scene and a representation of a road, wherein the ground truth comprises a set of measured radar detection points of said scene;
for each training sample of the set of training samples:
generate a set of synthetic radar detection points by processing the data defining the scene through the radar measurement model, thereby generating an output indicative of the set of synthetic radar detection points;
compare the set of synthetic radar detection points with the set of measured radar detection points of the ground truth; and
update one or more model parameters of the radar measurement model based on the comparison.
